# EUROPEAN PATENT APPLICATION

(11) **EP 4 815 517 A1**
(43) Date of publication of application: **30.09.2026**
(21) Application number: 23959513.5
(22) Date of filing: 20.11.2023
(51) Int. Cl.: H04W 4/40, H04W 4/12, B60W 40/02, B60W 60/00

(54) **METHOD AND APPARATUS FOR TRANSMITTING MESSAGE IN WIRELESS COMMUNICATION SYSTEM**

(71) Applicant: LG Electronics Inc., Yeongdeungpo-gu Seoul 07336 (KR)
(72) Inventor: HWANG, Jaeho, Seoul 06772 (KR); SHIN, Dongsoo, Seoul 06772 (KR); SEO, Hanbyul, Seoul 06772 (KR); KIM, Yunjong, Seoul 06772 (KR)
(74) Representative: Plasseraud IP
(86) International application number: PCT/KR2023/018631
(87) International publication number: WO 2025/110256

(57) **Abstract**

A first apparatus for transmitting a message in a wireless communication system, according to various embodiments, may: receive, from first user equipment, a first vehicle-to-everything (V2X) message including apparatus information for a second apparatus; on the basis of a V2X message for the second apparatus not being received from the first user equipment within a specific period of time after the first V2X message is received, determine that the second apparatus is in a first state; on the basis of the second apparatus being in the first state, generate, by using the apparatus information, object information including a first state area and first state information related to the second apparatus; and transmit, to a third apparatus, an object message including the object information.

## Description

### TECHNICAL FIELD

The present disclosure relates to a method by which a device transmits a message to an autonomous driving delivery robot and a mobility device in a wireless communication system, and an apparatus therefor.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

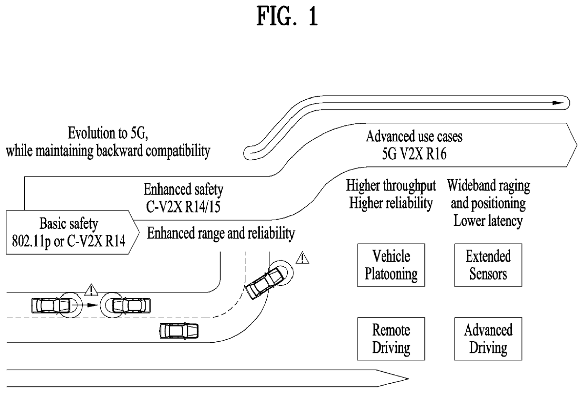

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

### DISCLOSURE

### Technical Problem

An objective of the present disclosure is to provide a method for transmitting and receiving a message capable of providing a safety service more accurately and efficiently.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### Technical Solution

In an aspect of the present disclosure, provided herein is a method of transmitting, by a first device, a message in a wireless communication system. The method includes: receiving a first vehicle-to-everything (V2X) message including device information on a second device from a first user equipment (UE); based on the second device being in a first state, generating object information including a first state area related to the second device and first state information related to the second device using the device information; and transmitting an object message including the object information to a third device. Based on a V2X message for the second device not being received from the first UE within a specific time after reception of the first V2X message, the first device may determine that the second device is in the first state.

Alternatively, the object information may include information on a reference position value, a length, and a width for specifying the first state area, or include two position values for specifying the first state area.

Alternatively, the method may further include: receiving personal safety messages (PSMs) or vulnerable road user (VRU) messages including information on a movement path of a VRU from second UEs located around the second device; and correcting the object information for the second device based on the VRU movement path.

Alternatively, the object information may further include gap information and gap rank information for the second device in the first state. The gap information may include information on a gap between the second device and another device, and the gap rank information may include a rank value counted based on a number of VRU movement paths passing through the gap.

Alternatively, the method may further include grouping the second device and at least one device adjacent to the second device into one group based on a location of the second device.

Alternatively, based on the one group for the second device being formed, the first state area related to the second device may be specified as an area including both the second device and the at least one device included in the one group.

Alternatively, based on a V2X message for the second device being received from the first UE while the second device is in the first state, the first device may determine a state of the second device to be a second state and stop generation of the object information for the second device.

Alternatively, the first state may be a parking state.

In another aspect of the present disclosure, provided herein is a non-transitory computer-readable storage medium storing instructions for performing the above-described method of transmitting a message.

In another aspect of the present disclosure, provided herein is an apparatus for performing the above-described method of transmitting a message.

In another aspect of the present disclosure, provided herein is a processing device for controlling an apparatus for performing the above-described method of transmitting a message.

In a further aspect of the present disclosure, provided herein is a method of receiving, by a mobility device, a message in a wireless communication system. The method includes: transmitting a V2X message including device information on the mobility device to a first device; receiving an object message including object information on a second device from the first device; and controlling driving based on the object information. Based on the second device being in a first state, the object information may include a first state area related to the second device, first state information related to the second device, gap information related to the second device, and gap rank information related to the second device.

### Advantageous Effects

According to an embodiment of the present disclosure, a message capable of providing a safety service in a wireless communication system may be transmitted and received more accurately and efficiently.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.
FIG. 1 is a diagram for explaining by comparing V2X communication based on RAT before NR and V2X communication based on NR.
FIG. 2 illustrates the structure of an LTE system to which embodiment(s) are applicable.
FIG. 3 illustrates the structure of an NR system to which embodiment(s) are applicable.
FIG. 4 illustrates the structure of an NR radio frame to which embodiment(s) are applicable.
FIG. 5 illustrates the slot structure of an NR frame to which embodiment(s) are applicable.
FIG. 6 illustrates a radio protocol architecture for SL communication.
FIG. 7 illustrates UEs performing V2X or SL communication.
FIG. 8 illustrates resource units for V2X or SL communication.
FIG. 9 is a diagram for explaining an ITS station reference architecture.
FIG. 10 illustrates an exemplary structure of an ITS station that may be designed and applied based on a reference architecture.
FIGS. 11 and 12 are diagrams for explaining a method by which a server generates/transmits a message including parking information for a mobility device.
FIG. 13 is a block diagram briefly illustrating configurations of a server and a UE included in a system in which a mobility safety service is provided.
FIG. 14 is a diagram for explaining a message structure of a V2X message further including parking state information.
FIGS. 15 and 16 are diagrams for explaining a method by which a UE/mobility device configures an object field for indicating a parking state.
FIGS. 17 to 19 are diagrams for explaining a method by which a server generates object information based on parking state information.
FIGS. 20 to 23 are diagrams for explaining a method by which a server transmits a parking message including object information on a mobility device in a parking state.
FIGS. 23 to 25 are diagrams for explaining a method of exchanging messages among a server, an n-th UE, and an autonomous delivery robot.
FIG. 26 is a diagram for explaining a method by which a server and a UE transmit/receive a parking message including object information or parking object information for a parked mobility device.
FIG. 27 is a diagram for explaining a method by which an autonomous delivery robot drives based on a parking message.
FIG. 28 is a diagram for explaining a method by which a first device transmits an object message including object information on a parked second device.
FIG. 29 illustrates a communication system applied to the present disclosure.
FIG. 30 illustrates wireless devices applicable to the present disclosure.
FIG. 31 illustrates another example of a wireless device to which the present disclosure is applied.
FIG. 32 illustrates a vehicle or an autonomous driving vehicle applied to the present disclosure.

### DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto

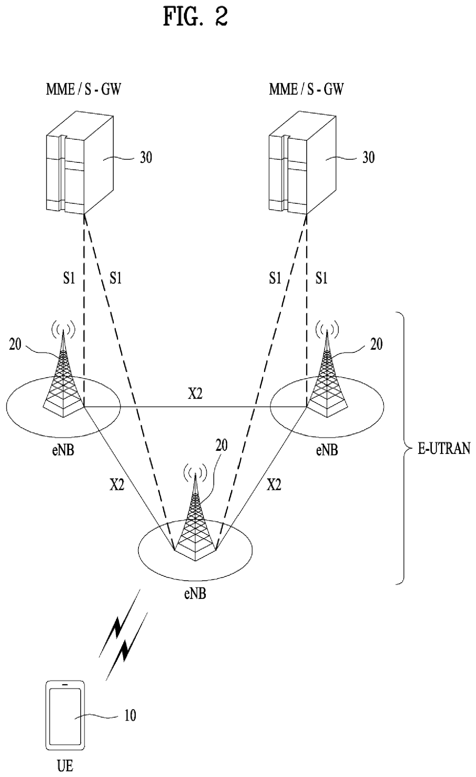

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an Sl interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2), and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

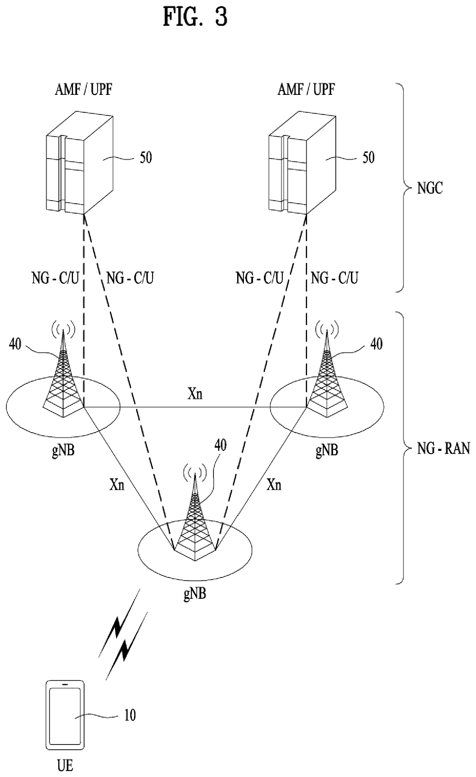

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

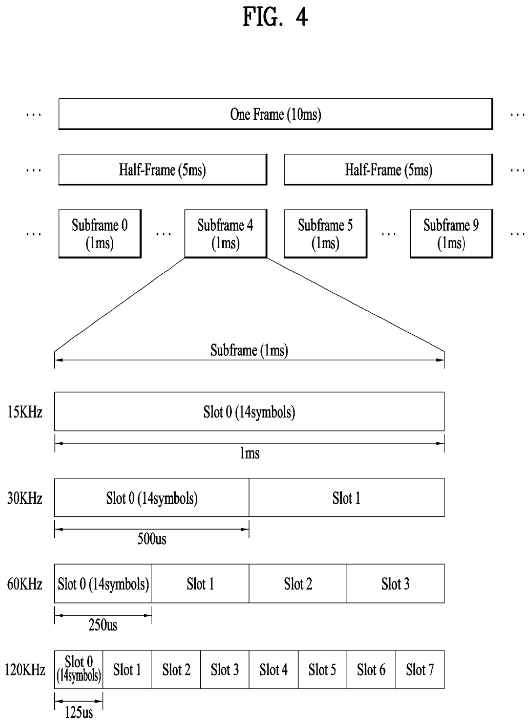

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame N^{frame,u}ₛₗₒₜ, and the number of slots per subframe N^{subframe,u}ₛₗₒₜ according to an SCS configuration µ in the NCP case.

**[Table 1]**

| SCS (15*2u) | N^{slot}_{symb} | N^{frame,u}ₛₗₒₜ | N^{subframe,u}ₛₗₒₜ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

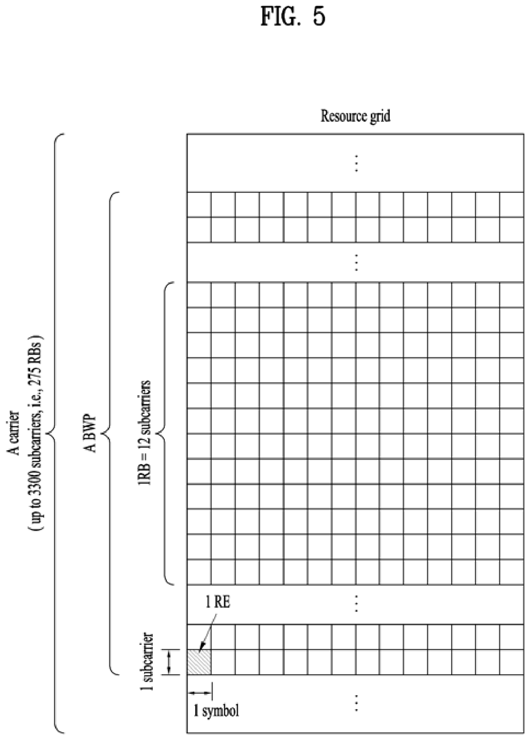

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

Hereinafter, V2X or sidelink (SL) communication will be described.

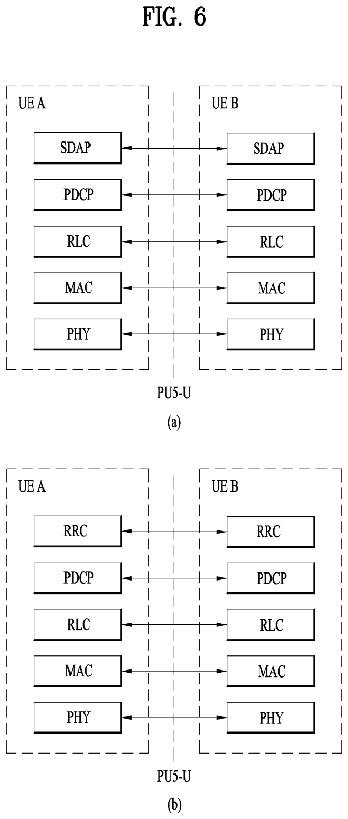

FIG. 6 illustrates a radio protocol architecture for SL communication. Specifically, FIG. 6-(a) shows a user plane protocol stack of NR, and FIG. 6-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

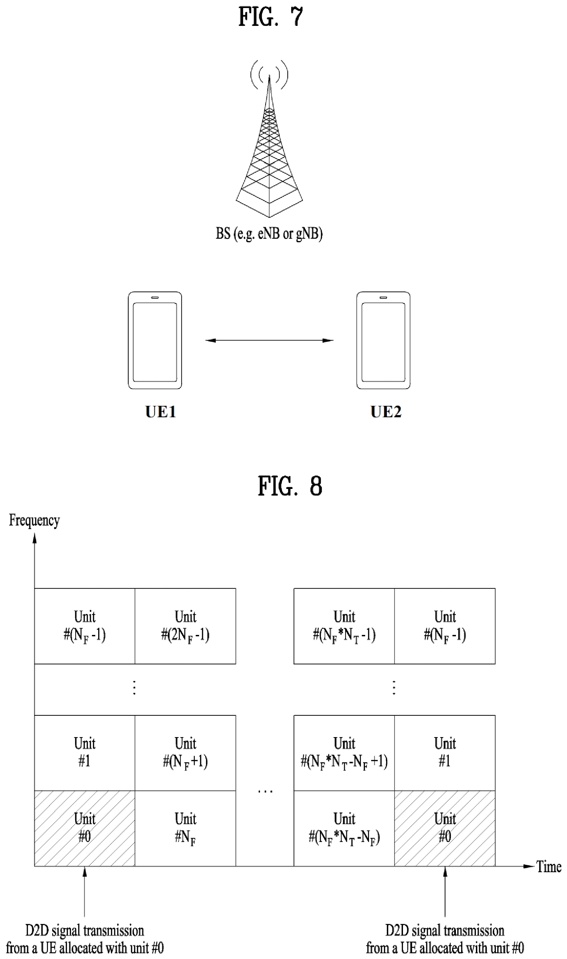

FIG. 7 illustrates UEs performing V2X or SL communication.

Referring to FIG. 7, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 8 illustrates resource units for V2X or SL communication.

Referring to FIG. 8, the frequency resources of a resource pool may be divided into NF sets, and the time resources of the resource pool may be divided into NT sets. Accordingly, a total of NF * NT resource units may be defined in the resource pool. FIG. 8 shows an exemplary case where the resource pool is repeated with a periodicity of NT subframes.

As shown in FIG. 8, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.

(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.

(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.

(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

### Vehicular Communications for ITS

An intelligent transport system (ITS) utilizing vehicle-to-everything (V2X) may mainly include an access layer, a network & transport layer, a facilities layer, an application layer, security and management entities, etc. Vehicle communication may be applied to various scenarios such as vehicle-to-vehicle communication (V2V), vehicle-to-network communication (V2N or N2V), vehicle-to-road side unit (RSU) communication (V2I or I2V), RSU-to-RSU communication (I2I), vehicle-to-pedestrian communication (V2P or P2V), and RSU-to-pedestrian communication (I2P or P2I). A vehicle, a BS, an RSU, a pedestrian, etc. as the subjects of vehicle communication are referred to as ITS stations.

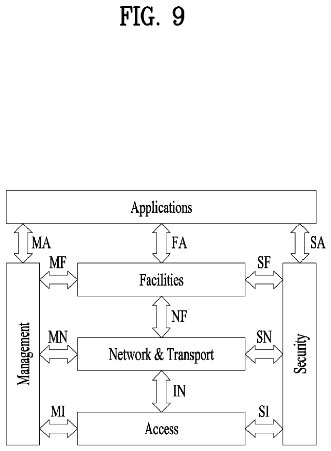

FIG. 9 is a diagram for explaining an ITS station reference architecture.

The ITS station reference architecture may include an access layer, a network & transport layer, a facilities layer, entities for security and management, and an application layer at the top. Basically, the ITS station reference architecture follows a layered OSI model.

Specifically, features of the ITS station reference architecture based on the OSI model are illustrated in FIG. 9. The access layer of the ITS station corresponds to OSI layer 1 (physical layer) and layer 2 (data link layer), the network & transport layer of the ITS station corresponds to OSI layer 3 (network layer) and layer 4 (transport layer), and the facilities layer of the ITS station corresponds to OSI layer 5 (session layer), layer 6 (presentation layer), and layer 7 (application layer).

The application layer, which is located at the highest layer of the ITS station, may actually implement and support a use-case and may be selectively used according to the use-case. The management entity serves to manage all layers in addition to managing communication and operations of the ITS station. The security entity provides security services for all layers. Each layer of the ITS station exchanges data transmitted or received through vehicle communication and additional information for various purposes through an interface. The abbreviations of various interfaces are described below.
MA: Interface between management entity and application layer
MF: Interface between management entity and facilities layer
MN: Interface between management entity and networking & transport layer
MI: Interface between management entity and access layer
FA: Interface between facilities layer and ITS-S applications
NF: Interface between networking & transport layer and facilities layer
IN: Interface between access layer and networking & transport layer
SA: Interface between security entity and ITS-S applications
SF: Interface between security entity and facilities layer
SN: Interface between security entity and networking & transport layer
SI: Interface between security entity and access layer

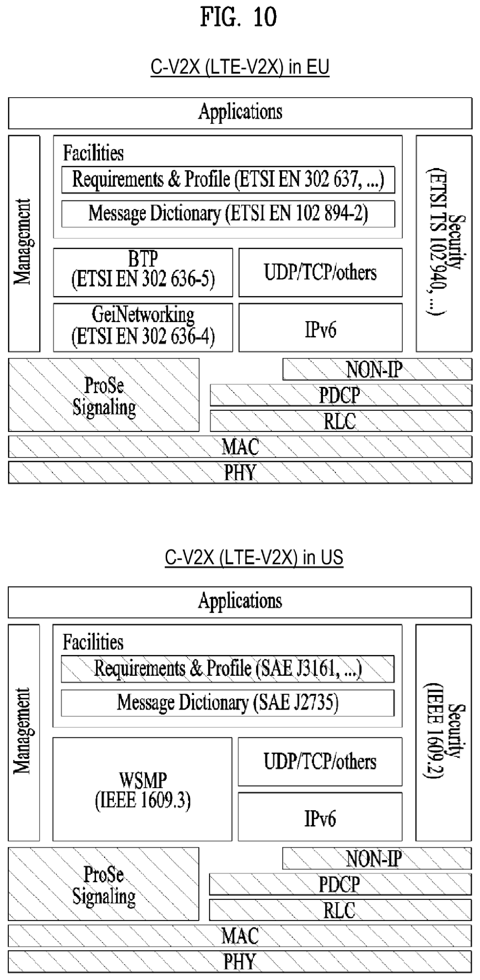

FIG. 10 illustrates an exemplary structure of an ITS station that may be designed and applied based on a reference architecture.

A main concept of the ITS station reference architecture is to allow each layer with a special function to process communication on a layer basis, between two end vehicles/users included in a communication network. That is, when a V2V message is generated, the data is passed through each layer downwards layer by layer in the vehicle and the ITS system (or other ITS-related UEs/systems), and a vehicle or ITS system (or other ITS-related UEs/systems) receiving the message passes the message upwards layer by layer.

The ITS system operating through vehicle communication and the network was organically designed in consideration of various access technologies, network protocols, communication interfaces, etc. to support various use-cases, and the roles and functions of each layer described below may be changed depending on a situation. The main functions of each layer will be briefly described.

The application later actually implements and supports various use-cases. For example, the application layer provides security, efficient traffic information, and other entertainment information.

The application layer controls an ITS station to which an application belongs in various manners or provides services by transferring a service message to an end vehicle/user/infrastructure through the access layer, the network & transport layer, and the facilities layer, which are lower layers of the application layer, by vehicle communication. In this case, the ITS application may support various use-cases. In general, these use-cases may be supported by grouping into other applications such as road-safety, traffic efficiency, local services, and infotainment. Application classification, use-cases, etc. may be updated when a new application scenario is defined. Layer management serves to manage and service information related to operation and security of the application layer, and the related information is transmitted and shared bidirectionally through an MA and an SA (or service access point (SAP), e.g., MA-SAP or SA-SAP). A request from the application layer to the facilities layer or a service message and related information from the facilities layer to the application layer may be delivered through an FA.

The facilities layer serves to support effective implementation of various use-cases defined in an application layer of a higher layer. For example, the facilities layer may perform application support, information support, and session/communication support.

The facilities layer basically supports the 3 higher layers of the OSI model, for example, a session layer, a presentation layer, and the application layer, and functions. Specifically, the facilities layer provides facilities such as application support, information support, and session/communication support, for the ITS. Here, the facilities mean components that provide functionality, information, and data.

The application support facilities support the operation of ITS applications (mainly generation of a message for the ITS, transmission and reception of the message to and from a lower layer, and management of the message). The application support facilities include a cooperative awareness (CA) basic service and a decentralized environmental notification (DEN) basic service. In the future, facilities entities for new services such as cooperative adaptive cruise control (CACC), platooning, a vulnerable roadside user (VRU), and a collective perception service (CPS), and related messages may be additionally defined.

The information support facilities provide common data information or a database to be used by various ITS applications and includes a local dynamic map (LDM).

The session/communication support facilities provide services for communications and session management and include an addressing mode and session support.

Facilities may be divided into common facilities and domain facilities.

The common facilities are facilities that provide common services or functions required for various ITS applications and ITS station operations, such as time management, position management, and service management.

The domain facilities are facilities that provide special services or functions required only for some (one or more) ITS applications, such as a DEN basic service for road hazard warning applications (RHW). The domain facilities are optional functions and are not used unless supported by the ITS station.

Layer management serves to manage and service information related to the operation and security of the facilities layer, and the related information is transmitted and shared bidirectionally through an MF and an SF (or MF-SAP and SF-SAP). The transfer of service messages and related information from the application layer to the facilities layer or from the facilities layer to the application layer is performed through an FA (or FA-SAP), and bidirectional service messages and related information between the facilities layer and the lower networking & transport layer are transmitted by an NF (or NF-SAP).

The network & transport layer servers to configure a network for vehicle communication between homogenous or heterogeneous networks through support of various transport protocols and network protocols. For example, the network & transport layer may provide Internet access, routing, and vehicle networking using Internet protocols such as TCP/UDP+IPv6 and form a vehicle network using a basic transport protocol (BTP) and GeoNetworking-based protocols. In this case, networking using geographic position information may also be supported. A vehicle network layer may be designed or configured depending on technology used for the access layer (access layer technology-independently) or regardless of the technology used for the access layer (access layer technology-independently or access layer technology agnostically).

Functionalities of the European ITS network & transport layer are as follows. Basically, functionalities of the ITS network & transport layer are similar to or identical to those of OSI layer 3 (network layer) and layer 4 (transport layer) and have the following characteristics.

The transport layer is a connection layer that delivers service messages and related information received from higher layers (the session layer, the presentation layer, and the application layer) and lower layers (the network layer, the data link layer, and the physical layer). The transport layer serves to manage data transmitted by an application of the ITS station so that the data accurately arrives at an application process of the ITS station as a destination. Transport protocols that may be considered in European ITS include, for example, TCP and UDP used as legacy Internet protocols, and there are transport protocols only for the ITS, such as the BTS.

The network layer serves to determine a logical address and a packet forwarding method/path, and add information such as the logical address of a destination and the forwarding path/method to a header of the network layer in a packet received from the transport layer. As an example of the packet method, unicast, broadcast, and multicast between ITS stations may be considered. Various networking protocols for the ITS may be considered, such as GeoNetworking, IPv6 networking with mobility support, and IPv6 over GeoNetworking. In addition to simple packet transmission, the GeoNetworking protocol may apply various forwarding paths or transmission ranges, such as forwarding using position information about stations including vehicles or forwarding using the number of forwarding hops.

Layer management related to the network & transport layer serves to manage and provide information related to the operation and security of the network & transport layer, and the related information is transmitted and shared bidirectionally through an MN (or MN-SAP) and an SN (or SN-SAP). Transmission of bidirectional service messages and related information between the facilities layer and the networking & transport layer is performed by an NF (or NF-SAP), and service messages and related information between the networking & transport layer and the access layer are exchanged by an IN (or IN-SAP).

A North American ITS network & transport layer supports IPv6 and TCP/UDP to support existing IP data like Europe, and a wave short message protocol (WSMP) is defined as a protocol only for the ITS.

A packet structure of a wave short message (WSM) generated according to the WSMP includes a WSMP header and WSM data carrying a message. The WSMP header includes Version, PSID, WSMP header extension fields, WSM WAVE element ID, and Length.

Version is defined by a WsmpVersion field indicating an actual WSMP version of 4 bits and a reserved field of 4 bits. PSID is a provider service identifier, which is allocated according to an application in a higher layer and helps a receiver to determine an appropriate higher layer. Extension fields is a field for extending the WSMP header, and includes information such as a channel number, a data rate, and transmit power used. WSMP WAVE element ID specifies the type of a WSM to be transmitted. Length specifies the length of transmitted WSM data in octets through a WSMLength field of 12 bits, and the remaining 4 bits are reserved. LLC Header allows IP data and WSMP data to be transmitted separately and is distinguished by Ethertype of a SNAP. The structures of the LLC header and the SNAP header are defined in IEEE802.2. When IP data is transmitted, Ethertype is set to 0x86DD in the LLC header. When WSMP is transmitted, Ethertype is set to 0x88DC in the LLC header. The receiver identifies Ethertype. If Ethertype is 0x86DD, the receiver transmits upward the packet to an IP data path, and if Ethertype is 0x88DC, the receiver transmits upward the packet to a WSMP path.

The access layer serves to transmit a message or data received from a higher layer on a physical channel. As access layer technologies, ITS-G5 vehicle communication technology based on IEEE 802.11p, satellite/broadband wireless mobile communication technology, 2G/3G/4G (long-term evolution (LTE), etc.)/5G wireless cellular communication technology, cellular-V2X vehicle-dedicated communication technologies such as LTE-V2X and NR-V2X (new radio), broadband terrestrial digital broadcasting technology such as DVB-T/T2/ATSC3.0, and GPS technology may be applied.

A data link layer is a layer that converts a physical line between adjacent nodes (or between vehicles) with noise into a communication channel without transmission error, for use in the higher network layer. The data link layer performs a function of transmitting/delivering/forwarding L3 protocols, a framing function of dividing data to be transmitted into packets (or frames) as transmission units and grouping the packets, a flow control function of compensating for a speed difference between a transmitter and a receiver, and a function of (because there is a high probability that an error and noise occurs randomly in view of the nature of a physical transmission medium) detecting a transmission error and correcting the error or detecting a transmission error based on a timer and an ACK signal by a transmitter in a method such as automatic repeat request (ACK) and retransmitting a packet that has not been correctly received. In addition, to avoid confusion between packets or ACK signals, the data link layer performs a function of assigning a sequence number to the packets and the ACK signals, and a function of controlling establishment, maintenance, and disconnection of a data link between network entities, and data transmission between network entities. The main functions of logical link control (LLC), radio resource control (RRC), packet data convergence protocol (PDCP), radio link control (RLC), medium access control (MAC), and multi-channel operation (MCO) included in the data link layer will be described below.

An LLC sub-layer enables the use of different lower MAC sub-layer protocols, and thus enables communication regardless of network topology. An RRC sub-layer performs functions such as broadcasting of cell system information required for all UEs within a cell, management of delivery of paging messages, management (setup/maintenance/release) of RRC connection between a UE and an E-UTRAN, mobility management (handover), transmission of UE context between eNodeBs during handover, UE measurement reporting and control therefor, UE capability management, temporary assignment of a cell ID to a UE, security management including key management, and RRC message encryption. A PDCP sub-layer may perform functions such as IP packet header compression in a compression method such as robust header compression (ROHC), cyphering of a control message and user data, data integrity, and data loss prevention during handover. RLC sub-layer delivers a packet received from the higher PDCP layer in an allowed size of the MAC layer through packet segmentation/concatenation, increases data transmission reliability by transmission error and retransmission management, checks the order of received data, reorders data, and checks redundancy. A MAC sub-layer performs functions such as control of the occurrence of collision/contention between nodes for use of shared media among multiple nodes, matching a packet delivered from the higher layer to a physical layer frame format, assignment and identification of the address of the transmitter/receiver, detection of a carrier, collision detection, and detection of obstacles on the physical medium. An MCO sub-layer enables efficient provision of various services on a plurality of frequency channels. The main function of MCO sub-layer is to effectively distribute traffic load of a specific frequency channel to other channels to minimize collision/contention of communication information between vehicles in each frequency channel.

The physical layer is the lowest layer in the ITS layer architecture. The physical layer defines an interface between a node and a transmission medium and performs modulation, coding, and mapping of a transport channel to a physical channel, for bit transmission between data link layer entities and informs the MAC sub-layer of whether a wireless medium is busy or idle by carrier sensing or clear channel assessment (CCA).

A SoftV2X system may be a system in which a SoftV2X server receives a VRU message or a personal safety message (PSM) from a vulnerable road user (VRU) or a V2X vehicle and transfers information on a neighbor VRU or vehicle based on the VRU message or the PSM message or may analyze a road condition, etc. on which neighbor VRUs or vehicles move and may transmit a message informing a neighbor VRU or vehicle of a collision warning, etc. based on the analyzed information (e.g., through a downlink signal) via V2X communication using a UU interface. Here, the VRU message may be a message transmitted to the SoftV2X server through the UU interface, and may include mobility information about the VRU, such as a position, a movement direction, a movement path, and a speed of the VRU. That is, the SoftV2X system may use a method of receiving mobility information of VRUs and/or vehicles related to V2X communication through the UU interface and controlling a driving route or a VRU movement flow of the VRU, etc. based on the mobility information received by the SoftV2X server, such as a network. The SoftV2X system may be configured in relation to V2N communication.

User equipment or pedestrian equipment (VRU device) that is difficult to perform direct communication (PC5, DSRC) related to V2X communication can provide or receive driving information and mobility information to nearby vehicles or VRUs through the SoftV2X system based on the UU interface. Through this, the user equipment or pedestrian equipment (VRU device) that is difficult to perform the direct communication (PC5, DSRC) can be protected from surrounding vehicles.

### Guidance on Parking Environment for Driving Assistance of Autonomous Delivery Mobility Device

An unmanned autonomous vehicle, such as an autonomous driving delivery robot or an autonomous driving shuttle, in which a driver is absent or does not participate in driving, may check/recognize a field of view on a travel path based on sensors, such as a camera, a light detection and ranging (LiDAR) sensor, and a radar sensor, mounted on a device/UE, and may perform driving. Due to characteristics of a standalone device that performs driving based on sensors, when a sensor is obscured by severe weather or vehicles, the device may have a drawback in that the device is not capable of ensuring not only safe driving but also pedestrian safety.

Hereinafter, a technology for collecting information on a vehicle/mobility device parked around a driving lane in order to assist driving of an autonomous driving delivery robot (or a mobility device) connected to a connectivity mobility platform, and for allowing a server to provide information on the parked vehicle/mobility device to surrounding vehicles or mobility devices, will be described in detail. The connectivity mobility platform may be formed based on the above-described SoftV2X system.

The autonomous driving delivery robot and the mobility device may correspond to a driving device capable of traveling by power, such as a vehicle, a bus, or a truck. The autonomous driving delivery robot and the mobility device may directly perform wireless communication with surrounding devices or a network, or perform wireless communication with surrounding devices or a network through a UE connected by wire or wirelessly. When the mobility device directly performs wireless communication with surrounding devices or a network, the mobility device may be defined as a UE/communication device. Hereinafter, even when the autonomous driving delivery robot and the mobility device are described as transmitting/receiving a message/signal, such description may be understood as including a case in which transmission/reception of the message/signal is performed through the UE.

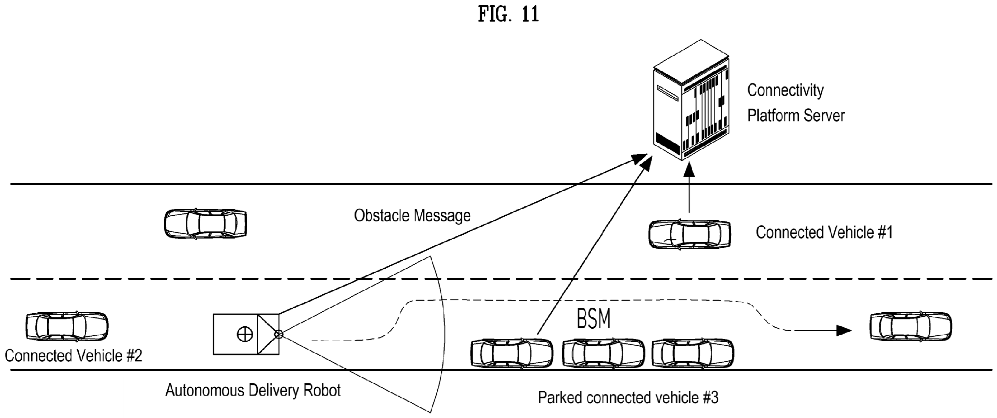

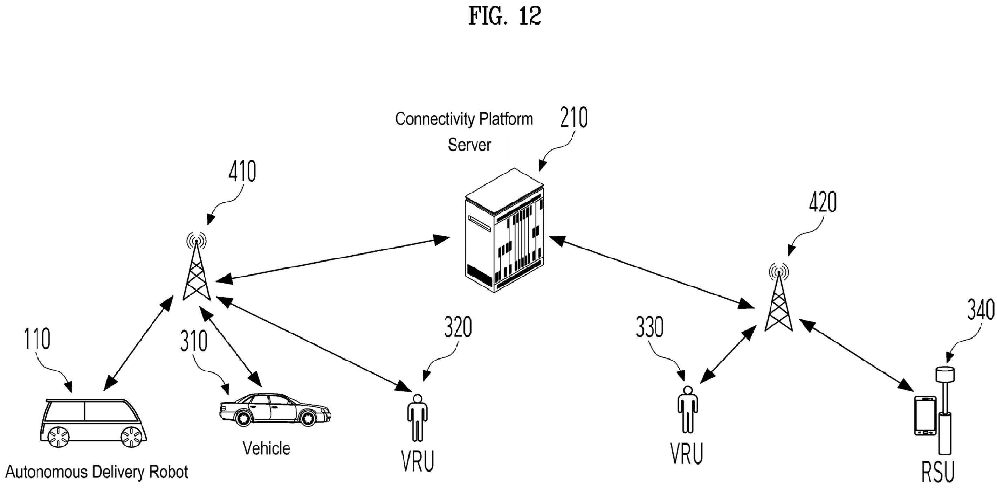

FIGS. 11 and 12 are diagrams for explaining a method by which a server generates/transmits a message including parking information for a mobility device.

Referring to FIG. 11, a server may identify a parked/stopped mobility device (or a parked vehicle), generate parking/obstacle information for the mobility device identified as being parked/stopped, and transmit the parking/obstacle information to surrounding mobility devices.

Specifically, the mobility device may periodically transmit a V2X message (or a V2N message), such as a BSM, including information on a location and a state of the mobility device through a smartphone or a UE connected to the mobility device by wire or wirelessly. In this case, the server may receive the V2X message periodically transmitted from the mobility device and may transmit/forward the V2X message to surrounding mobility devices associated with the mobility device.

When operation of the mobility device is stopped due to parking or the like, the mobility device may stop transmitting the V2X message. When the server does not receive the V2X message from the mobility device or the UE included in the mobility device for a predetermined time, the server may determine that the mobility device has entered an off state due to parking or the like. In this case, the server may acquire, based on the V2X message last received from the mobility device/UE, information on a location at which the operation has stopped and information on a shape/type of the mobility device. The server may generate object information related to an obstacle, such as a parking area of the mobility device, based on the acquired information. The server may transmit an object message or a parking message including the generated object information to the surrounding mobility devices, on behalf of the mobility device in the parking state. That is, the server may forward a message periodically transmitted by the mobility device/UE to the surrounding mobility devices. When the mobility device/UE does not transmit the message for a predetermined time, the server may directly generate object information for the mobility device and transmit the object information to the surrounding mobility devices.

Referring to FIG. 12, a connectivity platform server or a server 210 may be connected to mobility devices 110, 310, and 320 through a first BS 410 and may be connected to UEs 330 and 340 through a second BS 420. Here, the mobility device 110 may be an autonomous delivery robot that travels autonomously. The mobility device 110 may receive, from the server 210 through the BS 410, a safety service related to mobility by using a Uu interface method. The mobility devices 310 and 320 may also receive, from the server 210 through the BS 410, a safety service related to mobility by using the Uu interface method. The UEs 330 and 340 in another area may also receive a safety service from the server 210 through the second BS 420.

Hereinafter, configuration blocks between the server 210 and a UE in the system in which the mobility safety service is provided will be described in detail. The UE may be a device that transmits a message, that is, a V2X message, for any one device among the mobility devices 110, 310, and 320. The UE may be connected by wire or wirelessly to the corresponding device within the corresponding device.

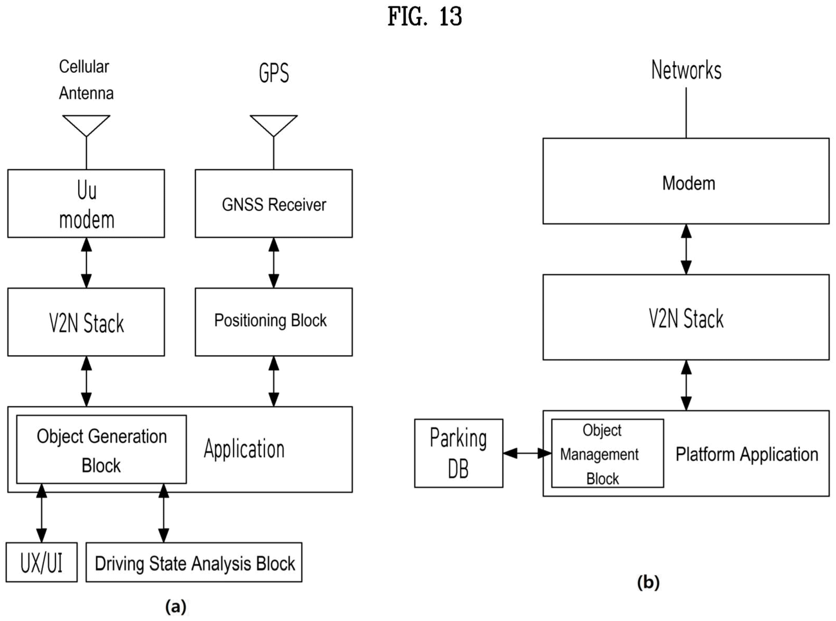

FIG. 13 is a block diagram briefly illustrating configurations of a server and a UE included in a system in which a mobility safety service is provided.

Referring to FIG. 13(a), a UE may periodically generate and transmit a V2X message, such as a BSM, for a mobility device, as in the related art. As described above, the UE may be connected by wire or wirelessly to any one of the mobility devices 110, 310, and 320 and may transmit a message, such as a BSM (or a V2X message), including device information (or vehicle information) on the mobility device.

Specifically, the UE may obtain location information of the UE through a global navigation satellite system (GNSS) device such as a global positioning system (GPS) device. An application block of the UE may generate the V2X message including device information on the mobility device (or object information including a device type, a size, and a shape) and the location information. The generated V2X message may be delivered/transmitted to a server through a Uu interface modem.

The UE may further include a driving state analysis block for providing parking information and an object generation block connected to a user experience/user interface (UX/UI) block. The driving state analysis block may analyze state information indicating whether the mobility device/vehicle in which the UE is mounted/included is in a driving state or a parking state, based on a speed, a height, and an impact amount related to the UE. Alternatively, the UX/UI block may distinguish/analyze whether the mobility device is in the parking state or the driving state based on whether a user of the mobility device touches a parking button, a usage pattern of the mobility device, and whether connectivity with the mobility device, such as Bluetooth or universal serial bus (USB), is established. The object generation block may receive, from the driving state analysis block and the UX/UI block, parking state information on the parking state or the driving state of the mobility device that has been analyzed. When parking of the mobility device is identified based on the parking state information, the object generation block may stop transmission of the BSM, generate parking information on the mobility device, and transmit the parking information to the server. In this case, the UE may transmit a VRU message or a PSM for a VRU or a user (that is, the UE may switch to a VRU mode).

Referring to FIG. 13(b), the server (or a mobility platform server) may provide a connectivity mobility service through a conventional modem, a V2X stack, and a platform application. The server may further include an object management block and a parking database (DB), and manage information on a parked mobility device based on the object management block and the parking DB. Specifically, the object management block may identify a parking object based on a message received from a UE of the parked mobility device and register the identified parking object corresponding to the parked mobility device in the parking DB. Alternatively, among parking objects included in the parking DB, when a change from a parking state to a driving state is identified for a parking object (that is, when the parked mobility device resumes transmission of the message), the object management block may update the parking DB by removing the parking object from the parking DB.

Hereinafter, a message structure of a V2X message including device information on a mobility device, parking state information indicating whether the mobility device is parked, and location information will be described in detail.

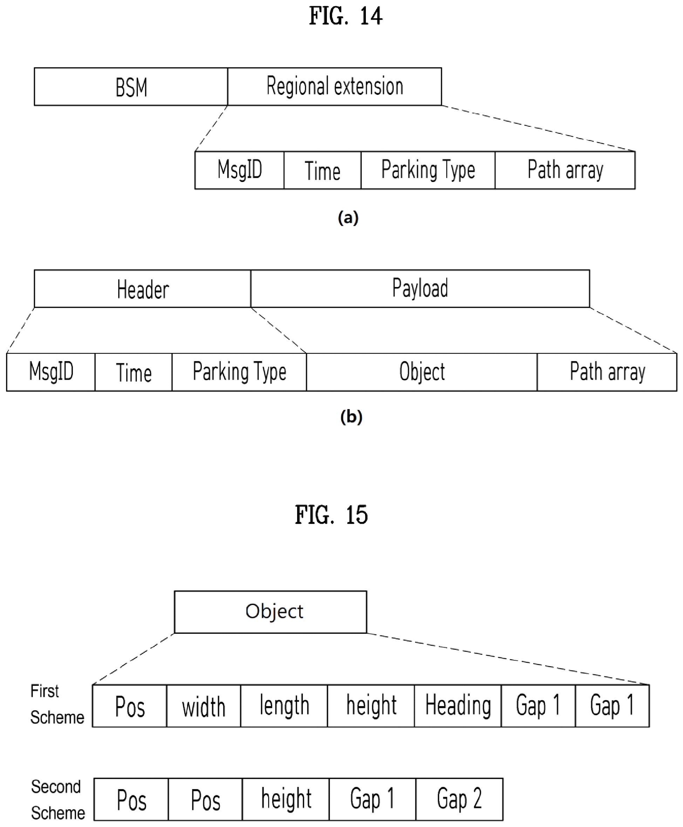

FIG. 14 is a diagram for explaining a message structure of a V2X message further including parking state information. Here, the V2X message may be a BSM periodically transmitted from a vehicle or the like.

When a driving state of a mobility device is determined to be a parking state, a UE of the mobility device may transmit a message (a V2X message or a BSM) including parking state information indicating the parking state to surrounding mobility devices (or surrounding UEs included in the surrounding mobility devices) and/or a server. Here, the message may have any one of two message types as illustrated in FIG. 14.

Referring to FIG. 14(a), the message may further include the parking state information using a regional extension field of a conventional BSM. The regional extension field of the BSM may include subfields for the parking state information. The subfields for the parking state information may include a MsgID subfield for distinguishing information on a parked mobility device, a time subfield indicating a parked time, and a parking type subfield including information on a parking state of the parked mobility device. In addition, the subfields for the parking state information may further include a path array subfield indicating a movement state of the UE that leaves the mobility device and transitions to a VRU state.

Alternatively, referring to FIG. 14(b), a new type of message for transmitting the parking state information of the mobility device may be defined. The new type of message may include a header and a payload. The header may include a MsgID field for distinguishing information on a parked mobility device, a time field indicating a parked time, and a parking type field including information on a parking state of the parked mobility device. The payload may include an object field including object information on the parked mobility device and a path array field indicating a movement state of a VRU or a user when the UE leaves the mobility device (that is, when a wired/wireless connection with the mobility device is terminated) and transitions to a VRU state.

Hereinafter, a method of configuring an object field in a new message according to FIG. 14(b) will be described in detail.

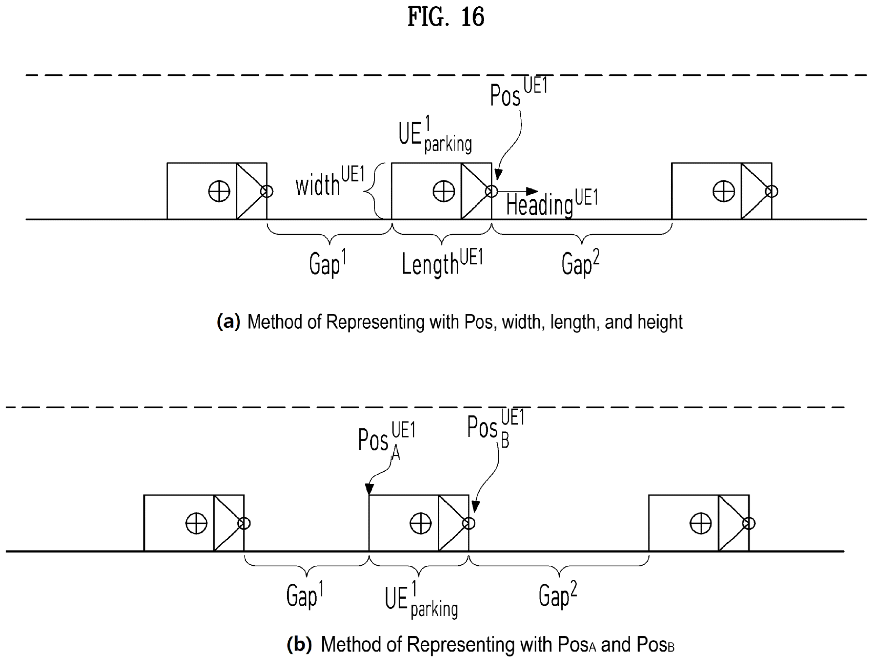

FIGS. 15 and 16 are diagrams for explaining a method by which a UE/mobility device configures an object field for indicating a parking state.

A UE of a mobility device may configure an object field for the mobility device based on any one of a first scheme and a second scheme.

Referring to FIG. 15, the object field according to the first scheme may include a Pos subfield, a width subfield, a length subfield, a height subfield, a heading subfield, a Gap 1 subfield, and a Gap 2 subfield. The object field according to the second scheme may include a first Pos subfield, a second Pos subfield, a height subfield, a Gap 1 subfield, and a Gap 2 subfield.

Referring to FIG. 16(a), in the first scheme, the object field may include a Pos subfield including information on a position (POS ^{UE1}) of a center of a front portion of the mobility device, which is a reference point, and may include a width subfield, a length subfield, and a height subfield indicating a width (width ^{UE1}), a length (length ^{UE1}), and a height (not shown) of a parking area (or an area of the mobility device) based on the reference point. Furthermore, the object field may further include a Gap 1 subfield and a Gap 2 subfield indicating a distance (Gap ¹) between a rear portion of the mobility device and another mobility device and a distance (Gap ²) between a front portion of the mobility device and another mobility device, which are obtained by an advanced driver assistance system (ADAS) sensor included in the mobility device. The object field may further include a heading subfield indicating a heading direction (Heading ^{UE1}). When the mobility device is diagonally parked (that is, when a parking type is a third type or a fourth type), the Gap 1 subfield and the Gap 2 subfield may indicate distances on both sides of the mobility device.

Referring to FIG. 16(b), in the second scheme, the object field may include a Pos A subfield and a Pos B subfield indicating positions of both end points of the parked mobility device (that is, one end point of a rear portion and one end point of a front portion as illustrated in FIG. 16(b)) ( ${POS}_{A}^{UE 1} , {POS}_{B}^{UE 1}$). The server may acquire information on the length and/or the width of the mobility device and information on the parking angle through the Pos A subfield and the Pos B subfield. In the second scheme, the object field may include a height subfield, a Gap 1 subfield (Gap¹), and a Gap 2 subfield (Gap²).

Hereinafter, when the server determines that the mobility device is in a parking state based on a message transmitted by the mobility device or the UE related to the mobility device, a method by which the server transmits a message including object information on the mobility device (or a parking object message) to surrounding mobility devices of the mobility device will be described in detail.

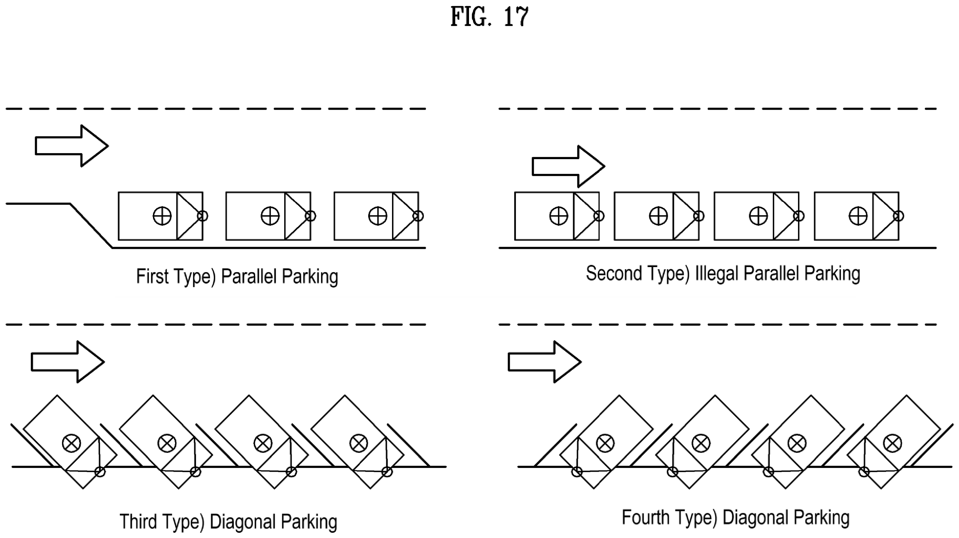

FIGS. 17 to 19 are diagrams for explaining a method by which a server generates object information based on parking state information.

Referring to FIG. 17, a server may set a risk level for a parked mobility device differently based on whether a parking type field for parking state information included in a message received from a UE of the parked mobility device is a first type, a second type, a third type, or a fourth type.

The first type may correspond to a case in which the mobility device is parallel-parked in a dedicated parking space, the second type may correspond to a case in which the mobility device is parked on a road rather than in the dedicated parking space, the third type may correspond to a case in which the mobility device is diagonally parked in a direction corresponding to a driving direction of the road, and the fourth type may correspond to a case in which the mobility device is diagonally parked in a direction not corresponding to the driving direction of the road.

In this case, the server may set the risk level differently according to the type of the parking state. For example, the risk level may increase in an order of the first type, the second type, the third type, and the fourth type. In the case of the first type, since the mobility device is parked in a dedicated parking space, a possibility of collision between a mobility device traveling on the road and the parked mobility device may be the lowest, even when the parked mobility device transitions back to a driving state. In the case of the second type, since the mobility device is parallel-parked on the road, a possibility of collision between a road-traveling vehicle and the parked mobility device may be higher than in the case of the first type. However, even when the mobility device parked as the second type transitions to a driving state again, movement of the mobility device is limited to the driving direction of the road, and thus a possibility of collision between the road-traveling vehicle and the parked mobility device may be lower than in the case of the third type. In the case of the third type, since the mobility device is diagonally parked in the driving direction of the road, a possibility of collision between a road-traveling vehicle and the parked mobility device may be higher than in the case of the second type. However, since a turning radius of the parked mobility device is smaller than that in the case of the fourth type, the risk level of the third type may be lower than that of the fourth type.

Furthermore, in the case of the third type, a mobility device traveling on the road, such as an autonomous driving delivery robot, may more readily recognize movement of a VRU between parked mobility devices, whereas, in the case of the fourth type, a mobility device traveling on the road, such as an autonomous driving delivery robot, may have difficulty recognizing movement of a VRU between parked mobility devices. Accordingly, in the case of the fourth type, a relatively higher risk level may be set than in the case of the other types in that a possibility of collision with a VRU may be higher than in the case of the other types. The server may further include information on the risk level according to the parking type in a parking message.

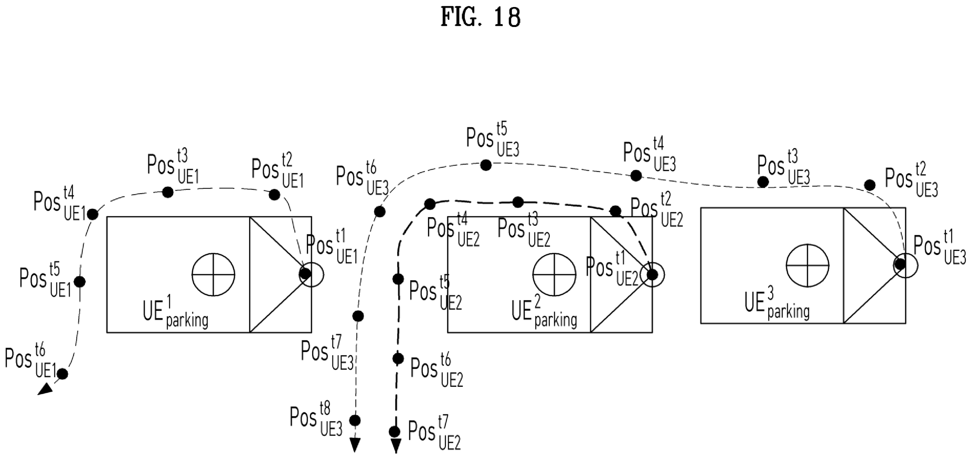

Referring to FIG. 18, a path array field may include information on a movement path of a user of a UE (hereinafter, a VRU movement path) when the UE is switched from a mobility mode to a VRU mode. As described above, the mobility mode may be a mode in which a UE transmits a BSM related to a mobility device, and the VRU mode may be a mode in which a UE leaves a mobility device (that is, a wired/wireless connection with the mobility device is disconnected) and transmits a message as a VRU.

A server may determine information on a gap, which is a distance between the mobility device and an adjacent mobility device, and gap rank information for the gap, based on the VRU movement path included in the path array field. For example, the server may predict a presence and a size of a space between parked mobility devices based on a VRU movement path passing through the space between the parked mobility devices, and determine a probability and a risk level that a pedestrian appears in the space based on the number of VRU movement paths passing through the space.

In addition, the server may predict/estimate the size of the parked mobility device and the distance between parked mobility devices based on the VRU movement path included in the path array field. The server may predict/estimate the size of the mobility device based on a movement path of a VRU going around the parked mobility device.

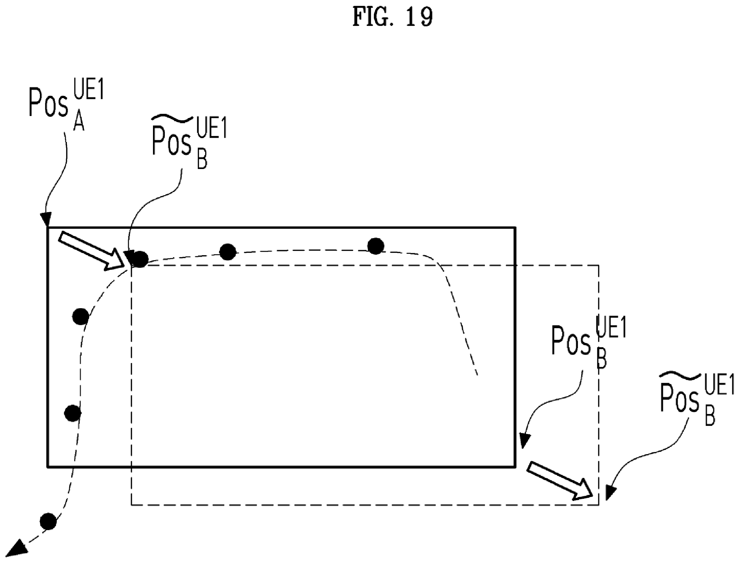

Specifically, referring to FIG. 19, the server may correct a parking area (or a first state area) of a mobility device related to a message (or a V2X message) based on a path array field included in a message transmitted by a UE/mobility device. For example, after determining an initial parking area of the mobility device based on driving state information included in the message of the UE/mobility device, when a VRU movement path based on the array field passes through the initial parking area, the server may change/correct the initial parking area based on the VRU movement path. Through such change/correction of the initial parking area based on the VRU movement path, interference with driving of surrounding mobility devices due to an incorrect initial parking area (for example, through an incorrect collision alarm or the like) may be minimized.

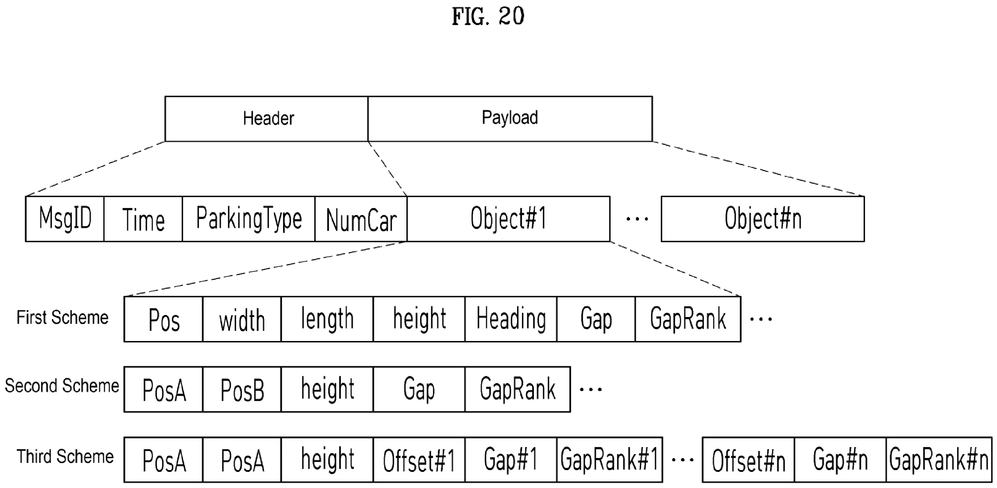

FIGS. 20 to 23 are diagrams for explaining a method by which a server transmits a parking message including object information on a mobility device in a parking state.

As described above, a server (or a mobility platform server) may collect information on a parked mobility device through a message received from a UE related to the mobility device. In this case, the server may directly generate parking object information on the parked mobility device and may transmit a parking message (or an object message) including the parking object information to surrounding mobility devices around the mobility device.

Referring to FIG. 20, a parking object message may include a header and a payload. The header may include a MsgID field, a time field indicating a parked time, a parking type field indicating a parking type of the parked mobility device, and a NumCar field indicating the number of at least one mobility device in a parking state. The payload may include at least one piece of parking object information generated for each of at least one mobility device identified/determined by the server as being in the parking state.

As illustrated in FIG. 20, the parking object information may be generated according to three schemes. Parking object information according to a first scheme (Method 1) and a second scheme (Method 2) may include the same information as the object information according to the first scheme and the object information according to the second scheme of a message transmitted by the UE described with reference to FIG. 15, except for a Gap subfield and a GapRank subfield.

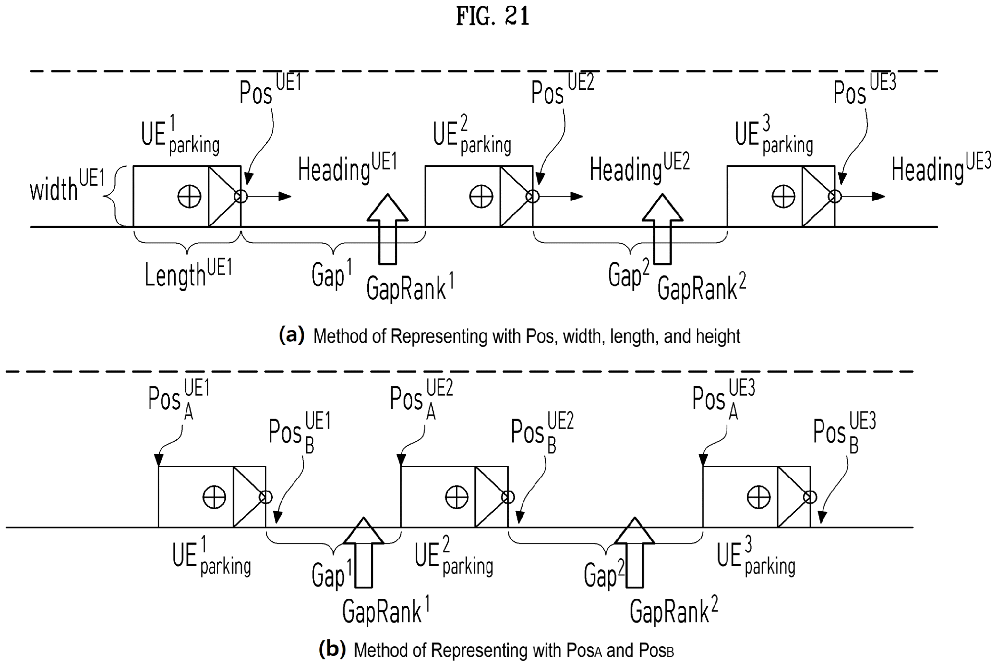

Specifically, referring to FIG. 21, a server may generate parking object information according to a first scheme (see FIG. 21(a)) or a second scheme (see FIG. 21(b)) based on object information of a message received from a UE of a parked mobility device. In this case, when another mobility device is identified in front of or behind the parked mobility device, the server may modify/update Gap 1 information and Gap 2 information included in the message of the UE and include the modified/updated Gap 1 information and Gap 2 information in the parking object information. A GapRank field may be an integer field having 128 bits. As described above, the GapRank field may include a rank value that increases by the number of times a VRU or a pedestrian passes through a front space or a rear space of the parked mobility device. In this case, as the rank value of the GapRank field in the parking object information increases, a probability that a VRU or a pedestrian appears in the front space or the rear space of the parked mobility device may increase.

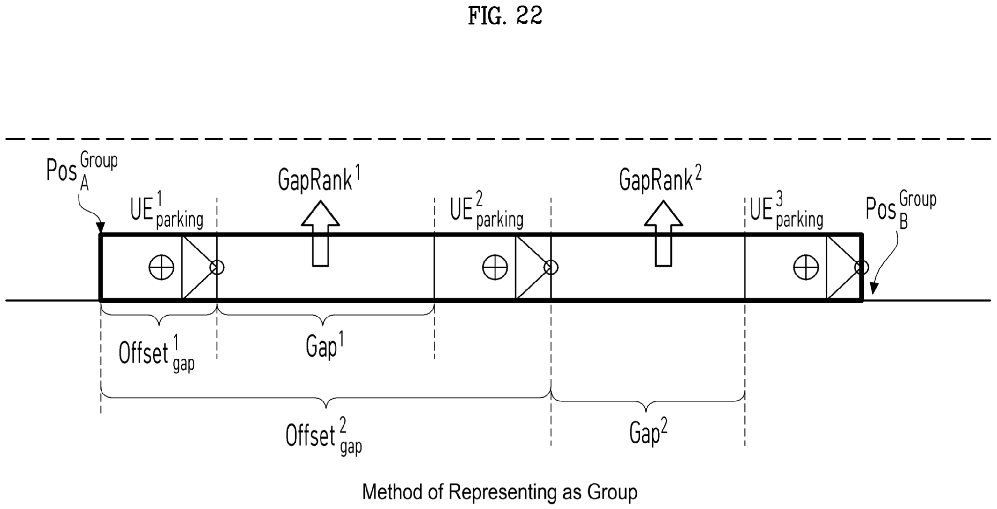

Referring to FIG. 22, parking object information according to a third scheme (Method 3) may represent parked mobility devices as one group. Specifically, a server may group mobility devices parked in a predetermined area into one group and generate group object information for the group. For example, the group object information may include information on ${POS}_{A}^{Group}$ and ${POS}_{B}^{Group}$ indicating parking areas (positions and sizes) of the group. In addition, the group object information may include, as information on spaces between the mobility devices, information on gaps between the mobility devices included in the group (Gap#1 to Gap#n), rank information on the gaps (GapRank#1 to GapRank#n), and offset information (Offset#1 to Offset#n).

Hereinafter, a method of exchanging messages among a server, an n-th UE of a mobility device, and an autonomous delivery robot, which is the mobility device, will be described in detail.

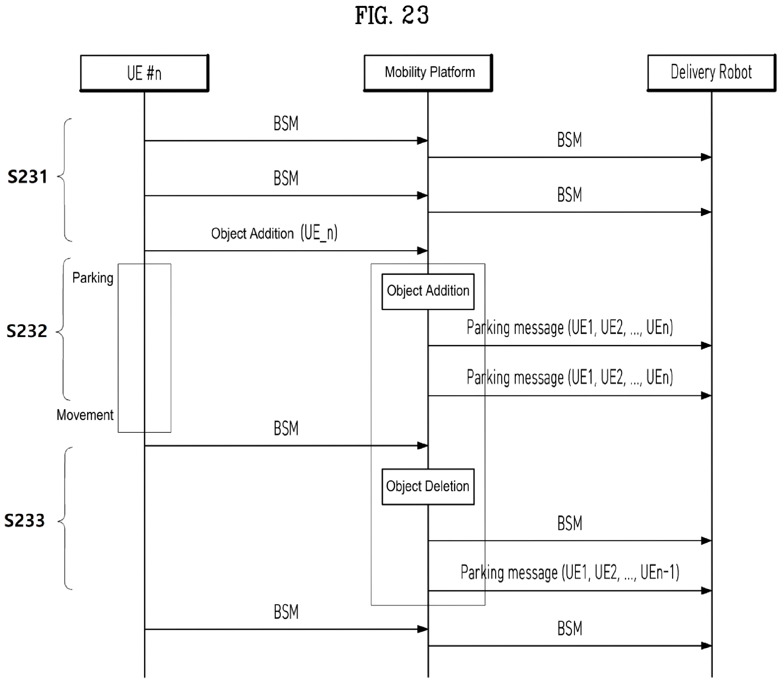

FIGS. 23 to 25 are diagrams for explaining a method of exchanging messages among a server, an n-th UE, and an autonomous delivery robot.

Referring to FIG. 23, an n-th UE (UE #n) in a mobility device may periodically generate/transmit a BSM or a V2X message for the mobility device (S231) (for example, in a mobility mode). A server (or a mobility platform server) may periodically receive the BSM or the V2X message from the n-th UE (UE #n) and forward the received BSM or V2X message to a surrounding autonomous delivery robot (or a surrounding mobility device).

Next, when the mobility device transitions to a parking state, the n-th UE (UE #n) may stop transmission of the BSM or the V2X message and transmit a message including parking state information for the mobility device to the server (in the case of FIG. 14(b), further including object information) (S232). The server may generate a parking message including parking object information based on the parking state information and transmit the parking message to an autonomous delivery robot traveling around the mobility device. In this case, the parking object information may include object information not only on the mobility device but also on other mobility devices in a parking state. Based on the parking object information, the autonomous delivery robot may identify a parking area (or a first state area) in which the mobility device is parked, and perform safe driving by avoiding the mobility device in the identified parking area.

Alternatively, the server may determine that the mobility device is in a parking state even when the server does not receive a message including the parking state information of the mobility device from the n-th UE (UE #n). For example, when the BSM or the V2X message is not received from the n-th UE (UE #n) within a specific time period (for example, a time period longer than a transmission period of the BSM or the V2X message), the server may determine/decide that the mobility device is in the parking state. Alternatively, the server may determine/predict a parking location/parking time of the mobility device based on a start time and a start location at which reception of a VRU message from the n-th UE (UE #n) starts (that is, a message transmitted when the n-th UE (UE #n) leaves the mobility device and is switched to a VRU mode). In this case, the server may generate parking object information for the mobility device based on the BSM or the V2X message last received from the n-th UE (UE #n) and transmit a parking message including the parking object information to the autonomous delivery robot.

When the n-th UE (UE #n) is reconnected to the mobility device and the mobility device is switched to a driving state, the n-th UE (UE #n) may resume transmission of the BSM or the V2X message for the mobility device. In this case, the server may transmit the parking message to the autonomous delivery robot by removing parking object information corresponding to the mobility device from the parking message (S233).

The n-th UE (UE #n) may not resume transmission of the BSM or the V2X message for the mobility device even when the mobility device is switched to the driving state as the n-th UE (UE #n) boards the mobility device. Hereinafter, when transmission of a BSM or a V2X message for a mobility device is not resumed, a method by which a server recognizes that the mobility device is switched to a driving state and updates a parking message will be described in detail.

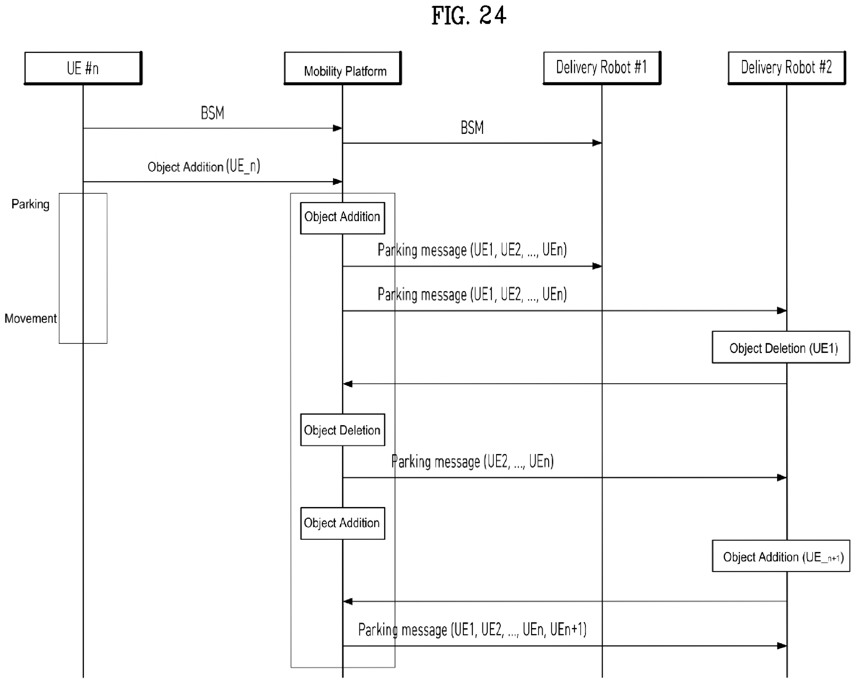

Referring to FIG. 24, a server may receive a BSM or a V2X message from an n-th UE (UE #n) and forward the received BSM or V2X message to surrounding autonomous delivery robots (autonomous delivery robot #1 and autonomous delivery robot #2).

Thereafter, when the mobility device enters a parking state, the n-th UE (UE #n) may transmit a message including parking state information on the parking state of the mobility device to the server. The server may update a parking message based on the parking state information (or based on the last received V2X message when the parking state information is not received). The server may transmit the updated parking message to the autonomous delivery robots (autonomous delivery robot #1 and autonomous delivery robot #2).

Next, the server may receive a request message requesting deletion of a parking object from at least one of the surrounding autonomous delivery robots (autonomous delivery robot #1 and autonomous delivery robot #2). The server may delete parking object information corresponding to the parking object requested to be deleted. Specifically, when a parked mobility device corresponding to the parking object information received from the server is not detected through a sensor during driving, the surrounding autonomous delivery robots (autonomous delivery robot #1 and autonomous delivery robot #2) may request deletion of the undetected mobility device (UE ₁) from the server. Alternatively, when a parked mobility device (UE ₙ₊₁) omitted from the parking object information received from the server is detected through a sensor during driving, the surrounding autonomous delivery robots (autonomous delivery robot #1 and autonomous delivery robot #2) may transmit a request message requesting addition of object information on the mobility device (UE ₙ₊₁) to the server. Here, the request message may include sensing information on the mobility device (UE ₙ₊₁) (for example, information related to a location and a parking range).

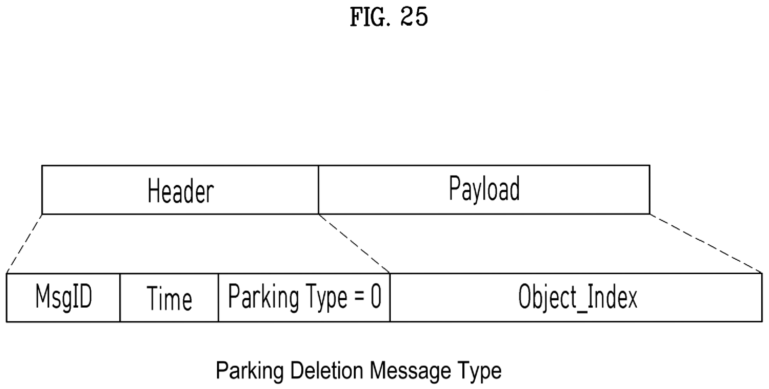

Referring to FIG. 25, a server may request surrounding mobility devices to delete a mobility device (UE1) indicated in a request message from the parking object information through a separately defined deletion message. Specifically, the deletion message may include a header and a payload, the header may include a ParkingType field set to '0', and the payload may include an object index field for an index of object information to be deleted.

Hereinafter, a method by which a server and a UE operate based on the above-described schemes will be described in detail.

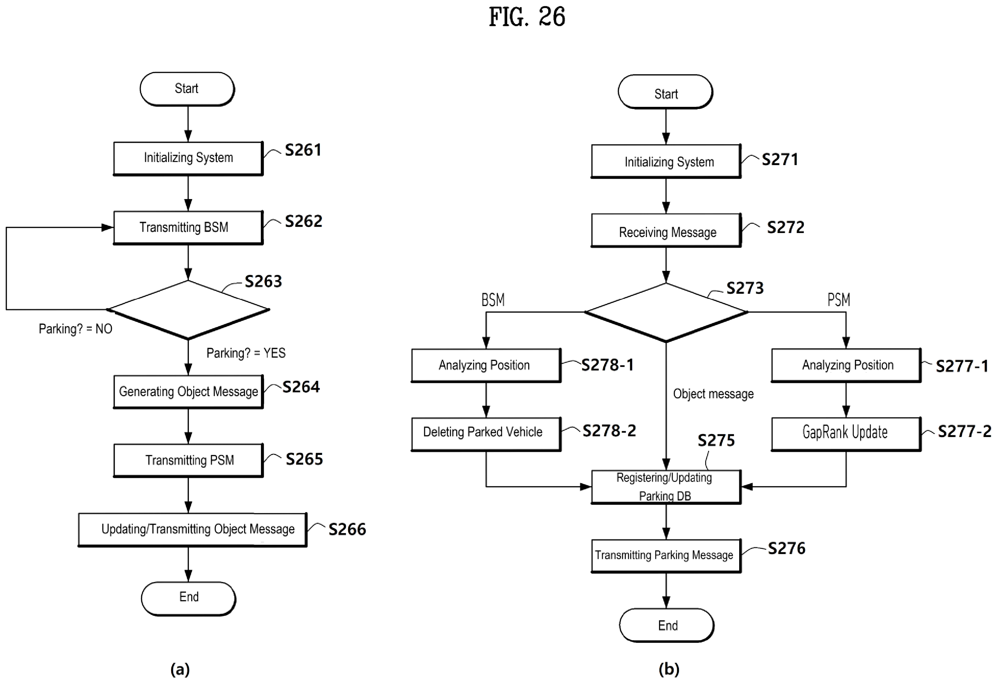

FIG. 26 is a diagram for explaining a method by which a server and a UE transmit/receive a parking message including object information or parking object information for a parked mobility device.

Referring to FIG. 26(a), when the system is initialized (S261), a UE (connected to a mobility device by wire or wirelessly) may periodically transmit a BSM or a V2X message for the mobility device (mobility mode) (S262).

The UE may determine/decide whether the mobility device is in a parking state (S263). When the mobility device is in a driving state rather than the parking state (S263, No), the UE may maintain periodic transmission of the BSM. In contrast, when the mobility device is in the parking state (S263, Yes), the UE may stop transmission of the BSM or the V2X message for the mobility device. The UE may generate an (object) message including parking state information for indicating the parking state of the mobility device and may transmit the (object) message to the server (S264).

When the UE is disconnected from the mobility device, the UE may periodically transmit a VRU message or a PSM, which is a message for protecting a VRU, a pedestrian, or the like (VRU mode) (S265). In this case, the UE may transmit, to the server, a message including a path array field based on path history of a VRU or a message for updating a parking location/parking area of the mobility device (S266).

Referring to FIG. 26(b), when the system starts, the server may initialize the system (S271). The server may periodically receive, from the UE, a BSM or a V2X message for the mobility device related to the UE (S272).

When the server receives, from the UE, a message including the parking state information, the server may add/register the mobility device corresponding to the parking state information in a parking DB (S275). The server may generate parking object information based on the parking state information and update the parking DB by registering the parking object information. The server may periodically transmit a parking message based on the updated parking DB (S276).

The server may receive, from the UE, a VRU message or a PSM for protection of a VRU or a user (S277-1), and update a Gap value and a GapRank value for the mobility device based on location information and information on a VRU movement path included in the PSM or the VRU message (S277-2). For example, the server may correct a parking area of the mobility device based on the location information and the VRU movement path included in the PSM or the VRU message. When the VRU movement path passes through one gap among two gaps for the mobility device, the server may increase a rank value for the gap. The server may update the parking DB based on the updated Gap value and GapRank value for the mobility device (S275). The server may periodically transmit the parking message based on the updated parking DB (S276).

Alternatively, upon receiving a BSM or a V2X message for the mobility device determined to be in the parking state again, the server may analyze the location of the mobility device (S278-1), determine deletion of the parking object information for the mobility device from the parking DB (S278-2), and update the parking DB by deleting the parking object information related to the mobility device from the parking DB (S275). The server may periodically transmit the parking message based on the updated parking DB (S276). When the mobility device is deleted, the server may reset/update a Gap value and/or a GapRank value for mobility devices parked around the mobility device.

Hereinafter, a method by which autonomous delivery robots or mobility devices drive by using/utilizing a parking message will be described in detail.

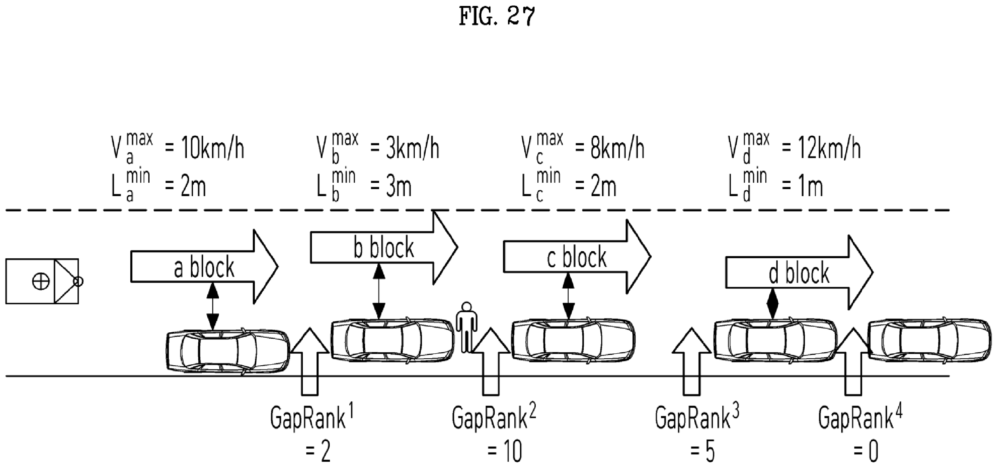

FIG. 27 is a diagram for explaining a method by which an autonomous delivery robot drives based on a parking message.

Referring to FIG. 27, an autonomous delivery robot may control a speed and a separation distance from a parked mobility device based on a GapRank value included in a parking message.

Specifically, when parked mobility devices are present on a road on which the autonomous delivery robot is to travel, the autonomous delivery robot may set a travel path for avoiding the mobility devices based on the parking message. In this case, in setting the travel path, the autonomous delivery robot may additionally consider the position of a Gap value and a GapRank value in parking object information included in the parking message. For example, as illustrated in FIG. 25, the autonomous delivery robot may distinguish a plurality of travel blocks (block a, block b, block c, and block d) on the travel path based on parking areas of the mobility devices determined based on the parking object information and gaps between the mobility devices. For each travel block, the autonomous delivery robot may set a speed and a separation distance from a parking area. For example, in the case of block a, the autonomous delivery robot may set a maximum speed to 10 km/h and may set the separation distance from the parking area to 2 m based on the GapRank value for block a being 2. In the case of block b, the autonomous delivery robot may set a maximum speed to 3 km/h and may set the separation distance from the parking area to 3 m based on the GapRank value for block b being 10. In the case of block c, the autonomous delivery robot may set a maximum speed to 8 km/h and may set the separation distance from the parking area to 2 m based on the GapRank value for block c being 5. In the case of block d, the autonomous delivery robot may set a maximum speed to 12 km/h and may set the separation distance from the parking area to 1 m based on the GapRank value for block d being 0. That is, the autonomous delivery robot may set the lowest speed for block b having the highest GapRank value and may set the highest speed for block d having the lowest GapRank value.

As described above, when a mobility device connected to a mobility platform server stops, the server may generate parking object information using location information and/or object information included in the last message and periodically transmit the parking object information for the mobility device on behalf of the mobility device. Accordingly, even when a parked mobility device does not transmit a BSM or a V2X message, parking object information for the parked mobility device may be periodically transmitted to surrounding mobility devices through the server. In this case, the surrounding mobility devices may perform safer driving by setting a travel path based on the parking object information even in an environment in which detection through a sensor is difficult.

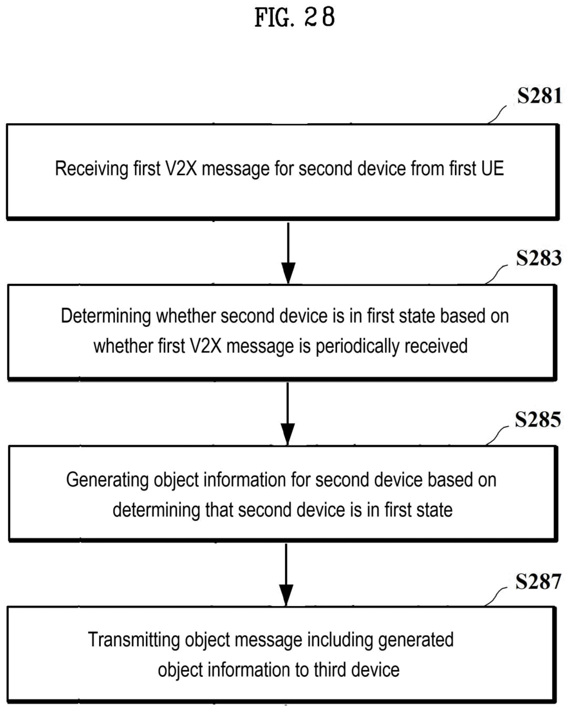

FIG. 28 is a diagram for explaining a method by which a first device transmits an object message including object information on a parked second device.

Referring to FIG. 28, the first device may receive a first V2X message for the second device from a first UE (S281). As described above, the first V2X message may include device information on the second device, such as a location, a device type, a device shape, and a device size, for recognition/perception of the second device. For example, the first V2X message may be a BSM for a vehicle safety service including the above-described vehicle information.

The second device may be a mobility device, which is a driving device such as a vehicle described in FIGS. 11 to 27, and the first UE may be a communication device connected to the mobility device by wire or wirelessly and configured to transmit/receive a BSM or a V2X message for the mobility device. In addition, the first device may be the above-described mobility platform server or the server. That is, the first device may forward/transmit, through a Uu interface, a V2X message for the second device received from the first UE to devices located in an area associated with the second device (for example, a vehicle, a mobility device, or an autonomous delivery robot).

Next, the first device may determine/decide whether the second device is in a first state based on the first V2X message or based on whether the first V2X message is periodically received (S283). As described above, the first state may be a state in which the second device is parked on a road, as described with reference to FIG. 11 to FIG. 27, and a second state may be a state in which the second device is traveling on a road.

Specifically, as described above with reference to FIG. 14(a), when a regional extension field of the first V2X message includes fields (MsgID, time, parking type, and path array) indicating that the second device is in the first state, the first device may determine the state of the second device to be the first state, which is a parking state. Alternatively, as described above with reference to FIG. 14(b), when the first V2X message includes parking state information, the first device may determine the state of the second device to be the first state, which is a parking state.

Alternatively, when the first device determines that periodic transmission of the first V2X message is stopped, the first device may estimate/determine that the second device is in the first state. For example, when a V2X message for the second device is not received from the first UE within a specific time period, the first device may determine that the second device is in the first state. This is because, when the second device, which is a mobility device/vehicle, is turned off due to parking, transmission of the V2X message for the second device is also stopped as a second UE is disconnected from the mobility device.

Subsequently, when the state of the second device is determined to be the first state, the first device may directly generate parking object information for the second device based on the first V2X message (S285). The first device may specify a first state area, which is a parking area related to the second device, based on the device information or the parking state information included in the first V2X message. The first device may generate object information or parking object information including the first state area and first state information indicating that the second device is in the parking state.

As described above with reference to FIG. 20, the object information or the parking object information may include information for specifying the first state area based on a first scheme, a second scheme, or a third scheme. The object information or the parking object information may further include gap information and information on a gap rank, as described above with reference to FIG. 20.

As described above with reference to FIG. 20 and FIG. 22, when other devices are parked adjacent to the first state area in which the second device is parked (or when a parking group exists in an area adjacent to the first state area), the first device may group the second device and the other devices into one parking group. In this case, as illustrated in FIG. 22, the first device may generate, as the object information, information on the first state area capable of including all parking areas of the devices included in the one group. In addition, as illustrated in FIG. 22, the object information for the one group may further include offset information, which is distance information between the second device and another adjacent device.

Thereafter, the first device may transmit, to a third device, an object message (or a parking message) including the generated object information (S287). That is, even when the V2X message for the second device in the parking state is not capable of being transmitted, the first device may periodically transmit the object message including the object information, which is parking information for the second device, to surrounding devices on behalf of the second device. The object message may be a parking message or a parking object message described with reference to FIGS. 11 to 27. The third device may be an autonomous driving delivery robot (an autonomous delivery robot or a delivery mobility device) described with reference to FIGS. 11 to 27. The third device may acquire information on a location/area and a range in which the second device in the first state is parked, from the object information included in the object message. The third device may control/set an autonomous driving path and a speed based on the acquired information.

As described above, the object information may further include information on a gap between the second device and another device and gap rank information for the gap. The gap rank information may include a value set according to the number of VRU movement paths passing through the gap based on a VRU message/PSM (a message including information on the VRU movement path) received from a VRU device/UE located in the first state area related to the second device or in an area adjacent to the first state area. For example, the gap rank information may include a value counted/increased by the number of VRU movement paths passing through the gap. In this case, as described with reference to FIG. 27, the third device may set/determine a path/travel speed for traveling in an area adjacent to the first state area based on the information on the gap and the information on the gap rank.

Alternatively, the first device may correct/modify the first state area based on the VRU movement path included in the VRU message. For example, the first device may exclude a portion overlapping the VRU movement path from the first state area.

Alternatively, when the V2X message for the second device determined to be in the first state is retransmitted from the first UE, the first device may determine that the state of the second device is switched from the first state to the second state. In this case, the first device may stop generation of object information for the second device and transmission of an object message for the second device including the object information. Alternatively, when an object message including object information for one group is transmitted according to the third scheme as described above, the first device may update the object information such that information related to the second device is deleted from the object information for the one group (by adjusting/changing at least one of an offset, a gap, and two position values for excluding the first state area for the second device from the first state area for the one group). The first device may transmit the object message including the updated (group) object information for the one group.

Alternatively, the first device may receive, from the third device, a message requesting deletion of object information for the second device. In this case, the first device may stop generation of object information periodically generated for the second device or update object information for one group including the second device such that object information for the second device is excluded from the object information for the one group. For example, when the second device corresponding to the first state area of the second device is not sensed/detected based on the object information, the third device may request, from the first device, deletion of the object information for the second device.

Alternatively, the first device may receive, from the third device, a request message requesting addition of object information for a specific device. In this case, the first device may generate object information for the specific device based on the request message and may transmit an object message including the object information. Alternatively, when object information for at least one device adjacent to the parking location of the specific device is generated, the first device may group the specific device and the at least one device into one group and transmit an object message including object information for the one group. Alternatively, when one group for the at least one device is already formed, the first device may update object information for the one group such that the object information for the specific device is included in the object information for the one group.

As described above, the object information generated by the first device or the first UE may be information on a parking area/parking type/parking state of a specific device/mobility device. Accordingly, the object information may also be defined as parking area information or parking information.

In a mobility platform system, when a first device, which is a server, identifies a specific mobility device in a parking state based on V2X messages, the first device may generate and transmit object information on the parking state of the specific mobility device on behalf of the specific mobility device, thereby significantly improving recognition of the specific mobility device by surrounding mobility devices. Alternatively, the surrounding mobility devices may effectively perform avoidance driving for the specific mobility device by recognizing the specific mobility device through a message including the object information of the first device. Alternatively, by additionally including gap information and gap rank information for a gap between mobility devices in a parking state in the object information, the first device may assist the surrounding mobility devices in preparing in advance for movement of a pedestrian through the gap.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

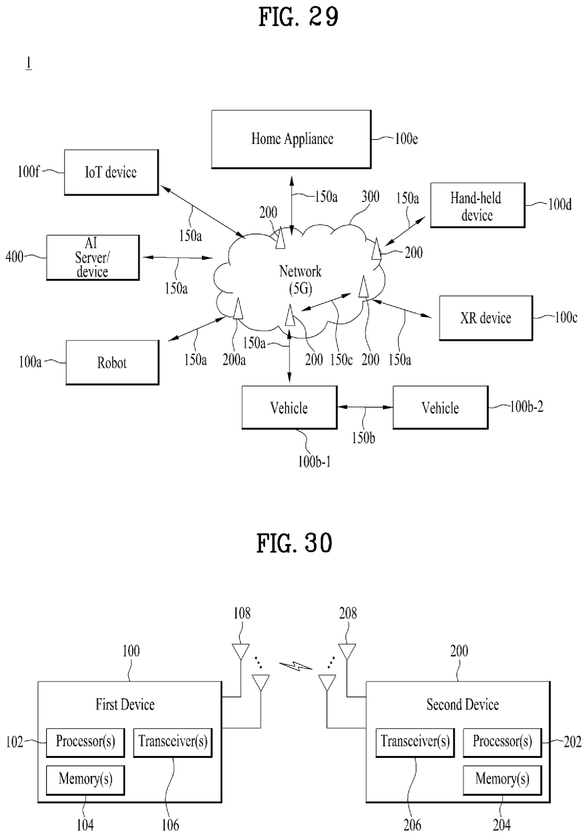

FIG. 29 illustrates a communication system applied to the present disclosure.

Referring to FIG. 29, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

FIG. 30 illustrates a wireless device applicable to the present disclosure.

Referring to FIG. 30, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 29.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, the first wireless device 100 or a first device may include the processor(s) 102 and the memory(s) 104 connected to the transceiver(s) 106. The memory(s) 104 may include at least one program capable of performing operations related to the embodiments described with reference to FIG. 11 to FIG. 28.

The processor(s) 102 may be configured to control the transceiver(s) 106 to receive a first V2X message including device information on a second device from a first UE, determine that the second device is in a first state based on a second V2X message not being received from the first UE within a specific time after reception of the first V2X message, generate object information including a first state area related to the second device and first state information related to the second device using the device information, and transmit an object message including the object information to a third device.

Alternatively, a processing device for controlling a first device may include a processor(s) 102 and a memory(s) 104. The processing device may cause the first device to receive a first V2X message including device information on a second device from a first UE, determine that the second device is in a first state based on a second V2X message not being received from the first UE within a specific time after reception of the first V2X message, generate object information including a first state area related to the second device and first state information related to the second device using the device information based on the second device being in the first state, and transmit an object message including the object information to a third device.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

The second wireless device 200 or a mobility device (or an autonomous driving delivery robot) may include the processor(s) 202 and the transceiver(s) 206. The processor(s) 202 may be configured to control the transceiver(s) 206 to transmit a V2X message including device information on the mobility device to a first device, receive an object message including object information on a second device from the first device, and control driving based on the object information. Here, based on the second device being in a first state, the object information may include a first state area related to the second device, first state information related to the second device, gap information related to the second device, and gap rank information related to the second device.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of wireless devices to which the present disclosure is applied

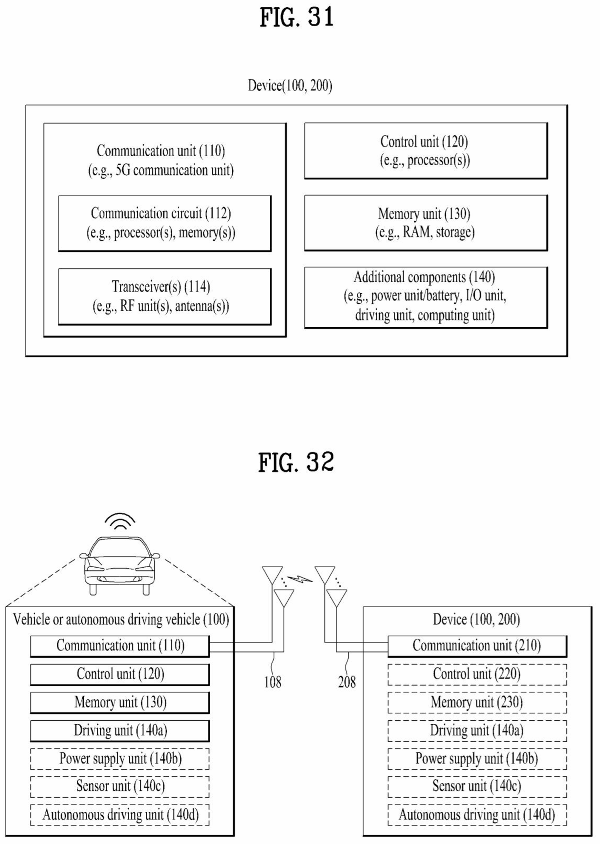

FIG. 31 illustrates another example of a wireless device applied to the present disclosure. The wireless device may be implemented in various forms according to a use-case/service (refer to FIG. 29)

Referring to FIG. 31, wireless devices 100 and 200 may correspond to the wireless devices 100 and 200 of FIG. 30 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 30. For example, the transceiver(s) 114 may include the one or more transceivers 106 and 206 and/or the one or more antennas 108 and 208 of FIG. 30. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 29), the vehicles (100b-1 and 100b-2 of FIG. 29), the XR device (100c of FIG. 29), the hand-held device (100d of FIG. 29), the home appliance (100e of FIG. 29), the IoT device (100f of FIG. 29), a digital broadcast terminal, a hologram device, a public safety device, an MTC device, a medicine device, a fintech device (or a finance device), a security device, a climate/environment device, the AI server/device (400 of FIG. 29), the BSs (200 of FIG. 29), a network node, etc. The wireless device may be used in a mobile or fixed place according to a use-example/service.

In FIG. 31, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

### Examples of vehicles or autonomous vehicles to which the present disclosure is applied

FIG. 32 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 32, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 29, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means.

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

The embodiments of the present disclosure described above are applicable to various mobile communication systems.

## Claims

1. A method of transmitting, by a first device, a message in a wireless communication system, the method comprising:
receiving a first vehicle-to-everything (V2X) message including device information on a second device from a first user equipment (UE);
based on the second device being in a first state, generating object information including a first state area related to the second device and first state information related to the second device using the device information; and
transmitting an object message including the object information to a third device,
wherein, based on a V2X message for the second device not being received from the first UE within a specific time after reception of the first V2X message, the first device determines that the second device is in the first state.

2. The method of claim 1, wherein the object information includes information on a reference position value, a length, and a width for specifying the first state area, or includes two position values for specifying the first state area.

3. The method of claim 1, further comprising:
receiving personal safety messages (PSMs) or vulnerable road user (VRU) messages including information on a movement path of a VRU from second UEs located around the second device; and
correcting the object information for the second device based on the VRU movement path.

4. The method of claim 3, wherein the object information further includes gap information and gap rank information for the second device in the first state,
wherein the gap information includes information on a gap between the second device and another device, and the gap rank information includes a rank value increased based on a number of VRU movement paths passing through the gap.

5. The method of claim 1, further comprising grouping the second device and at least one device adjacent to the second device into one group based on a location of the second device.

6. The method of claim 5, wherein, based on the one group for the second device being formed, the first state area related to the second device is specified as an area including both the second device and the at least one device included in the one group.

7. The method of claim 1, wherein, based on a V2X message for the second device being received from the first UE while the second device is in the first state, the first device determines a state of the second device to be a second state and stops generation of the object information for the second device.

8. The method of claim 1, wherein the first state is a parking state.

9. A computer-readable recording medium having recorded thereon a program for executing the method of claim 1.

10. A first device for transmitting a message in a wireless communication system, the first device comprising:
a radio frequency (RF) transceiver; and
a processor connected to the RF transceiver,
wherein the processor is configured to:
control the RF transceiver to receive a first vehicle-to-everything (V2X) message including device information on a second device from a first user equipment (UE);
determine that the second device is in a first state based on a V2X message for the second device not being received from the first UE within a specific time after reception of the first V2X message;
generate object information including a first state area related to the second device and first state information related to the second device based on the device information; and
transmit an object message including the object information to a third device.

11. A processing device for controlling a first device transmitting a message in a wireless communication system, the processing device comprising:
at least one processor; and
at least one memory connected to the at least one processor and storing instructions that, when executed by the at least one processor, cause the first device to:
receive a first vehicle-to-everything (V2X) message including device information on a second device from a first user equipment (UE);
determine that the second device is in a first state based on a V2X message for the second device not being received from the first UE within a specific time after reception of the first V2X message;
based on the second device being in the first state, generate object information including a first state area related to the second device and first state information related to the second device using the device information; and
transmit an object message including the object information to a third device.

12. A method of receiving, by a mobility device, a message in a wireless communication system, the method comprising:
transmitting a vehicle-to-everything (V2X) message including device information on the mobility device to a first device;
receiving an object message including object information on a second device from the first device; and
controlling driving based on the object information,
wherein, based on the second device being in a first state, the object information includes a first state area related to the second device, first state information related to the second device, gap information related to the second device, and gap rank information related to the second device.

13. The method of claim 12, wherein the gap information includes information on a gap between the second device and another device, the gap rank information includes a count value counted based on a number of vulnerable road users (VRUs) passing through the gap,
wherein the mobility device configures a driving speed and a separation distance from the first state area based on the gap information and the gap rank information.

14. A computer-readable recording medium having recorded thereon a program for executing the method of claim 12.

15. A mobility device for receiving a message in a wireless communication system, the mobility device comprising:
a radio frequency (RF) transceiver; and
a processor connected to the RF transceiver,
wherein the processor is configured to:
control the RF transceiver to transmit a vehicle-to-everything (V2X) message including device information on the mobility device to a first device;
receive an object message including object information on a second device from the first device; and
control driving based on the object information,
wherein, based on the second device being in a first state, the object information includes a first state area related to the second device, first state information related to the second device, gap information related to the second device, and gap rank information related to the second device.

16. A processing device for controlling a mobility device receiving a message in a wireless communication system, the processing device comprising:
at least one processor; and
at least one memory connected to the at least one processor and storing instructions that, when executed by the at least one processor, cause the mobility device to:
transmit a vehicle-to-everything (V2X) message including device information on the mobility device to a first device;
receive an object message including object information on a second device from the first device; and
control driving based on the object information,
wherein, based on the second device being in a first state, the object information includes a first state area related to the second device, first state information related to the second device, gap information related to the second device, and gap rank information related to the second device.
